# EUROPÄISCHE PATENTSCHRIFT

(11) **EP 2 611 221 B1**
(45) Veröffentlichungstag und Bekanntmachung des Hinweises auf die Patenterteilung: **11.12.2019**
(21) Anmeldenummer: 12187587.6
(22) Anmeldetag: 08.10.2012
(51) Int. Cl.: H04W 4/20, H04W 4/60, H04W 12/08, G06F 21/12

(54) **Verwaltung von Lizenzinformationen für ein Kommunikationsendgerät**
Management of license information for a communication terminal
Gestion des informations de licence pour un terminal de communication

(30) Priorität: 21.10.2011 DE 102011085050
(43) Veröffentlichungstag der Anmeldung: 03.07.2013
(73) Patentinhaber: Vodafone Holding GmbH, 40213 Düsseldorf (DE)
(72) Erfinder: Seifert, Ulrich, 40468 Düsseldorf (DE); Nozulak, Thorsten, 45711 Datteln (DE)
(74) Vertreter: Jostarndt Patentanwalts-AG

(56) Entgegenhaltungen:
- US-A1- 2004 205 151
- US-A1- 2007 130 079
- US-A1- 2007 198 834
- US-B1- 7 814 023

## Beschreibung

Die Erfindung befasst sich mit Lizenzen zur Ausführung von Applikationen und/oder Inhalten für ein Kommunikationsendgerät. Insbesondere betrifft die Erfindung ein Verfahren und ein System zum Steuern der Freigabe der Nutzung wenigstens einer Applikation und/oder von Inhalten in einem Kommunikationsendgerät, wobei die Nutzung freigegeben wird, wenn das Vorhandensein einer gültigen Lizenzinformation in einem Sicherheitsmodul des Kommunikationsendgeräts festgestellt wird. Bei dem Kommunikationsendgerät kann es sich insbesondere um ein mobiles Endgerät handeln

Die unberechtigte Benutzung von elektronischen Inhalten, wie beispielsweise Multimediadateien, und Applikationen in mobilen Endgeräten kann mithilfe von Lizenzen verhindert werden. Aufgrund einer Lizenz, die von dem Nutzer erworben worden ist, werden an berechtigte Benutzer Lizenzinformationen ausgegeben, die in den mobilen Endgeräten der Benutzer gespeichert werden. Der Zugriff auf die Inhalte oder auf Applikationen wird nur dann gestattet, wenn eine gültige Lizenzinformation in dem Endgerät vorliegt. In dem mobilen Endgerät kann die Lizenzinformation in einer Chipkarte, insbesondere einer SIM (Subscriber Identity Module)-Karte gespeichert werden, die zur Identifizierung und/oder Authentisierung eines Teilnehmers in einem Mobilfunknetz verwendet wird. Dies wird beispielsweise in der GB 2 387 505 A beschrieben.

Die bekannte Speicherung von Lizenzinformationen in einem mobilen Endgerät ist jedoch unflexibel, was sowohl für den Nutzer als auch für den Lizenzgeber zu Nachteilen führt.

So möchte der Lizenzgeber oftmals die Erlaubnis zur Nutzung der Inhalte oder Applikationen nicht zeitlich unbeschränkt erteilen, beispielsweise weil in regelmäßigen Zeitabständen Lizenzgebühren zu entrichten sind. Um dies zu erreichen kann die Gültigkeit von Lizenzinformation zeitlich befristet sein, wie es auch in dem zuvor genannten Dokument GB 2 387 505 A vorgeschlagen wird. Eine solche zeitliche Befristung hat jedoch den Nachteil, dass eine neue Lizenzinformation an den Nutzer gesendet und in seinem mobilen Endgerät hinterlegt werden muss, wenn der Nutzer Inhalte oder eine Applikation nach Ablauf der Gültigkeitsfrist weiter nutzen möchte und zur Nutzung berechtigt ist.

Ein weiterer Nachteil besteht darin, dass die Lizenzinformation nicht unabhängig von einer Gültigkeitsfrist gelöscht werden kann, wenn dies beispielsweise aufgrund einer fristunabhängigen Kündigung des Nutzers gewünscht ist.

US 2007/0198834 A1 offenbart ein Verfahren für die Authentifizierung von Anwendungen, wobei die Authentifizierung mittels eines von einem Kontrollserver übermittelten Kryptogramms durchgeführt wird, wobei das Kryptogramm auf von einen Endgerät übermittelten Daten beruht. Ein Sicherheitsmodul, das mit Endgerät lokal verbunden ist, ermittelt einen ersten Kontrollwert basierend auf dem Kryptogramm und einen zweiten Kontrollwert basierend auf im Sicherheitsmodul gespeicherten Lizensierungsdaten.

US 2007/0130079 A1 offenbart ein System und ein Verfahren zur Steuerung von Software-Anwendungen und zugehörigen Lizenzen.

Daher ist es eine Aufgabe der Erfindung, eine flexiblere Bereitstellung von Lizenzinformationen in einem Kommunikationsendgerät zu ermöglichen.

Die Aufgabe wird gelöst durch ein Verfahren nach Anspruch 1, durch ein Computerprogramm nach Anspruch 9, durch ein Kommunikationsendgerät nach Anspruch 10 und durch ein System nach Anspruch 12. Ausgestaltungen des Verfahrens, des Computerprogramms und des Kommunikationsendgeräts sind in den abhängigen Ansprüchen angegeben.

Gemäß einem ersten Aspekt der Erfindung wird ein Verfahren zum Steuern der Freigabe der Nutzung von Inhalten und/oder einer Applikation vorgeschlagen, wobei die Nutzung freigegeben wird, wenn das Vorhandensein einer gültigen Lizenzinformation in einem Sicherheitsmodul eines Kommunikationsendgeräts festgestellt wird. Das Verfahren zeichnet sich dadurch aus, dass eine in dem Sicherheitsmodul hinterlegte gültige Lizenzinformation aufgrund des Empfangs einer Löschungsnachricht aus dem Sicherheitsmodul gelöscht oder im Sicherheitsmodul als ungültig markiert wird.

Gemäß einem weiteren Aspekt schlägt die Erfindung ein Kommunikationsendgerät zur Freigabe einer Nutzung von Inhalten und/oder eine Applikation vor, wobei das Kommunikationsendgerät ein Sicherheitsmodul umfasst und die Nutzung freigebbar ist, wenn das Vorhandensein einer gültigen Lizenzinformation in dem Sicherheitsmodul festgestellt wird. Das Sicherheitsmodul ist derart ausgestaltet, dass eine in dem Sicherheitsmodul hinterlegte gültige Lizenzinformation aufgrund des Empfangs einer Löschungsnachricht in dem Kommunikationsendgerät aus dem Sicherheitsmodul gelöscht oder im Sicherheitsmodul als ungültig markiert wird.

Darüber hinaus stellt die Erfindung zudem ein Computerprogramm bereit, welches Softwarecodeabschnitte mit Befehlen umfasst, aufgrund derer das Verfahren und/oder einer Ausgestaltung des Verfahrens ausgeführt wird, wenn das Programm von einem Prozessor ausgeführt wird.

Ein Vorteil der Erfindung besteht darin, dass eine bereits an einen Nutzer ausgegebene und in einem Sicherheitsmodul hinterlegte Lizenzinformation aufgrund des Erhalts einer Nachricht bedarfsgerecht verworfen wird. Dies kann beispielsweise dann geschehen, wenn die Gültigkeit einer Lizenz - etwa aufgrund eines Fristablaufs - beendet wird, ohne dass der Nutzer die Lizenz verlängert. Wird die Lizenz hingegen verlängert, so kann die Lizenzinformation beibehalten werden. Zudem wird ermöglicht, das Sicherheitsmodul fristunabhängig zu einem beliebigen Zeitpunkt dazu zu instruieren, eine Lizenzinformation zu verwerfen. Das Sicherheitsmodul ist in einem Kommunikationsendgerät, das insbesondere als ein mobiles Endgerät ausgestaltet sein kann, das mit einem Mobilfunknetz verbindbar ist, enthalten.

In einer Ausgestaltung des Verfahrens, des Computerprogramms und des Endgeräts wird die Lizenzinformation aufgrund des Empfangs der Steuerungsnachricht gelöscht oder als ungültig markiert.

Eine weitere Ausgestaltung des Verfahrens, des Computerprogramms, des Endgeräts und des Systems ermöglicht, die Lizenzinformation per Fernzugriff in dem Sicherheitsmodul zu hinterlegen. In dieser Ausgestaltung ist vorgesehen, dass die Lizenzinformation zusammen mit einer Installationsnachricht an das Kommunikationsendgerät gesendet und aufgrund des Empfangs der Installationsnachricht in dem Sicherheitsmodul gespeichert wird. Somit kann nicht nur das Löschen bzw. die Markierung als ungültig, sondern auch die Hinterlegung der Lizenzinformation in dem Endgerät anhand einer an das Endgerät gesendeten Nachricht vorgenommen werden.

Um zu verhindern, dass unberechtigte Dritte eine Lizenzinformation in dem Sicherheitsmodul hinterlegen oder das Sicherheitsmodul dazu instruieren, eine gespeicherte Lizenzinformation zu verwerfen, sehen Ausführungsformen des Verfahrens, des Computerprogramms und des Endgeräts vor, dass die Löschungsnachricht und/oder die Installationsnachricht wenigstens ein Authentisierungsmerkmal umfassen und wobei die Lizenzinformation aufgrund einer erfolgreichen Prüfung des Authentisierungsmerkmals verworfen bzw. die Lizenzinformation aufgrund einer erfolgreichen Prüfung des Authentisierungsmerkmals in dem Sicherheitsmodul gespeichert wird.

Das Authentisierungsmerkmal kann mit einem kryptografischen Schlüssel eines vertrauenswürdigen Lizenzservers erzeugt werden. Ferner kann vorgesehen sein, dass das Authentisierungsmerkmal mit einem dem Sicherheitsmodul eindeutig zugeordneten Schlüssel erzeugt wird. Bei dem Authentisierungsmerkmal handelt es sich in einer Ausführungsform um eine Verschlüsselung zumindest eines Teils der Löschungsnachricht bzw. der Installationsnachricht.

In einer Ausführungsform des Verfahrens, des Computerprogramms und des Endgeräts ist die Löschungsnachricht und/oder die Installationsnachricht eine so genannte Over-the-Air (OTA)-Nachricht, die unter Nutzung des OTA-Mechanismus gesendet werden, der einen sicheren Fernzugriff auf Sicherheitsmodule ermöglicht. Unter anderem wird im Rahmen des OTA-Mechanismus auch ein Authentisierungsmerkmal der zuvor beschriebenen Art eingesetzt. Ferner kann die Löschungsnachricht und/oder die Installationsnachricht über ein Mobilfunknetz, mit dem das Kommunikationsendgerät verbunden ist, an das Endgerät gesendet werden.

Die Lizenz, die den Nutzer des Endgeräts dazu berechtigt, die Inhalte und/oder die Applikation mittels des Endgeräts zu nutzen, kann in einem Lizenzserver verwaltet werden. Wobei vorzugsweise die Löschungsnachricht an das Endgerät gesendet wird, wenn ein Lizenzserver feststellt, dass eine Lizenz des Nutzers des Endgeräts zur Nutzung der Inhalte und/oder der Applikation beendet ist. Die Feststellung kann in dem Lizenzserver beispielsweise aufgrund des Ablaufs einer Gültigkeitsfrist der Lizenz getroffen werden, wobei die Übermittlung der Löschungsnachricht vorzugsweise unterbleibt, wenn die Lizenz vor dem Ablauf der Gültigkeitsfrist verlängert wird.

Die Inhalte und/oder die Applikation kann in dem Kommunikationsendgerät genutzt werden, in dem die Lizenzinformation hinterlegt werden kann. Gleichfalls kann vorgesehen sein, dass die Inhalte und/oder die Applikation in einem weiteren Gerät, das mit dem Kommunikationsendgerät verbunden ist, genutzt wird. Dies erlaubt es, das Kommunikationsendgerät für die Freischaltung von Applikationen auf einem weiteren Gerät zu nutzen. Das weitere Gerät, bei dem es sich beispielsweise um einen PC (Personal Computer) handeln kann, kann mit dem Kommunikationsendgerät über eine drahtgebundene oder eine drahtlose Verbindung kommunizieren.

Das Sicherheitsmodul ist in einer Ausgestaltung des Verfahrens ein mit dem Endgerät verbundenes Identifizierungsmodul zur Identifizierung und/oder Authentisierung in dem Mobilfunknetz, welches insbesondere in einer mit dem Endgerät verbundenen Chipkarte enthalten ist. Insbesondere kann das Identifizierungsmodul beispielsweise als SIM-Karte oder als eine Chipkarte mit einem USIM (Universal Subscriber Identity Module) ausgestaltet sein.

Die zuvor genannten und weiteren Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung eines mobilen Endgeräts mit einem Sicherheitsmodul, in dem Lizenzinformationen gespeichert sind,
- Fig. 2: eine schematische Darstellung eines mobilen Endgeräts, in dem eine Lizenzinformation gespeichert ist und eines mit dem Endgerät verbundenen weiteren Geräts, in dem eine Applikation ausgeführt wird und
- Fig. 3: ein System zur Bereitstellung der Lizenzinformationen und zur Steuerung des Verwerfens der Lizenzinformation in dem Sicherheitsmodul..

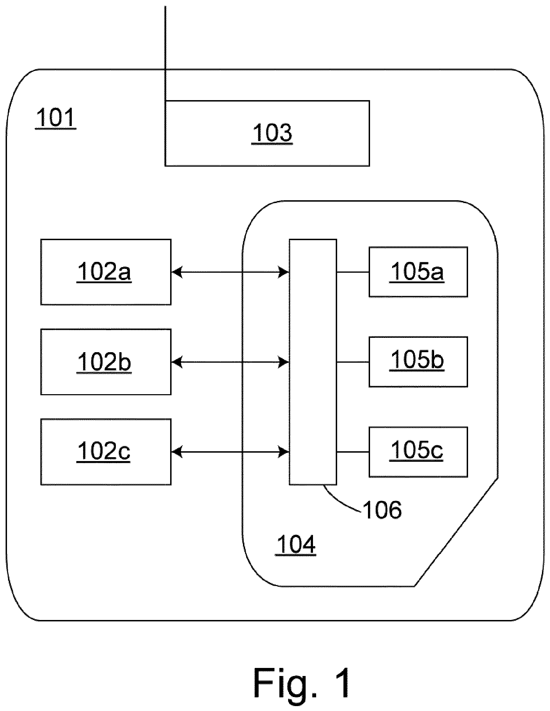

Das in der Figur 1 schematisch dargestellte Endgerät 101 enthält geschützte Applikationen 102i (i=a, b, c), die in dem Endgerät 101 ausgeführt werden können. In der Figur 1 sind beispielhaft drei geschützte Applikationen 102i dargestellt. In dem Endgerät 101 können jedoch auch weniger oder mehr geschützte Applikationen 102i ausgeführt werden. Die Applikationen 102i umfassen jeweils einen Softwarecode, der in einer Speichereinheit des Endgeräts 101 gespeichert und in einer Prozessoreinheit, bei der es sich beispielsweise um die einen oder mehrere Prozessoren umfassende Hauptprozessoreinheit des Endgeräts 101 handeln kann, ausgeführt wird. Je nach Funktionalität, welche die geschützten Applikationen bereitstellen, können die Applikationen auf weitere Einheiten des Endgeräts 101 zugreifen, welche zur Bereitstellung der Funktionalität benötigt werden. Insbesondere kann vorgesehen sein, dass die Applikationen Zugriff auf eine Benutzerschnittstelle des Endgeräts 101 haben, um mit dem Nutzer des Endgeräts 101 interagieren zu können. Die Benutzerschnittstelle kann Ausgabemittel, wie beispielsweise eine Displayeinheit und/oder eine Lautsprecheinheit sowie Eingabemittel, wie beispielsweise eine Tastatur und/oder ein Touchscreen sowie ein Mikrofon umfassen.

Eine geschützte Applikation 102i oder geschützte Funktionen der Applikation 102i kann in dem Endgerät 101 nur dann ausgeführt werden, wenn in dem Endgerät 101 eine der geschützten Applikation 102i zugeordnete gültige Lizenzinformation 105i (i = a, b, c) vorhanden ist. Wenn keine gültige Lizenzinformation 105i vorhanden ist, wird die Ausführung der Applikation 102i gesperrt, oder die Applikation 102i wird ausgeführt, der Zugriff auf die geschützten Funktionen wird jedoch nicht freigegeben. Bei der geschützten Funktion handelt es sich vorzugsweise um die Hauptfunktionen, die von der Applikation 102i bereitgestellt wird. Neben den Hauptfunktionen können von einer Applikation 102i weitere Funktionen bereitgestellt werden, die auch ohne in dem Endgerät 101 vorhandene Lizenzinformation 105i ausführbar sind. Ein Beispiel hierfür ist eine Funktion zur Installation und/oder zum Ordern einer Lizenzinformation 105i.

Die Lizenzinformation 105i kann unter anderem über ein Mobilfunknetz 301 zu dem Endgerät 101 übertragen werden. Sie kann über das Mobilfunknetz 301 oder in anderer Weise insbesondere von dem Betreiber des Mobilfunknetzes 301 ausgegeben werden, der auch die geschützten Applikationen 102i zur Verfügung stellen kann. In diesem Fall können die Applikationen 102i beispielsweise Zusatzfunktionen für den Einsatz des Endgeräts 101 in einem Mobilfunknetz 301 bereitstellen. Ein Beispiel hierfür ist eine Applikation 102i zur Verschlüsselung und Entschlüsselung von Nachrichten und/oder Sprachkommunikation, die über das Mobilfunknetz 301 gesendet werden bzw. erfolgt. Grundsätzlich können jedoch beliebige geschützte Applikationen bereitgestellt werden. Zudem müssen Lizenzinformationen 105i nicht durch den Betreiber des Mobilfunknetzes 301 ausgegeben werden, sondern können von beliebigen Anbietern über das Mobilfunknetz 301 oder in anderer Weise bereitgestellt werden.

Die Installation der geschützten Applikationen 102i kann in jeder dem Fachmann bekannten Art und Weise ebenso erfolgen, wie bei konventionellen ungeschützten Applikationen, die auch ohne das Vorhandensein von Lizenzinformationen 105i in dem Endgerät 101 ausführbar sind und zusätzlich zu den geschützten Applikationen in dem Endgerät 101 installiert sein können. Die geschützten Applikationen können beispielswiese bereits bei der Herstellung bzw. Erstkonfiguration in dem Endgerät 101 installiert werden. Gleichfalls kann eine spätere Installation erfolgen. Hierzu kann der zu installierende Softwarecode einer geschützten Applikation 102i über das Mobilfunknetz 301 oder in anderer Weise zu dem Endgerät 101 übertragen werden. Die Installation der zu einer Applikation 102i gehörenden Lizenzinformation 105i erfolgt in einem separaten Prozess, der zusätzlich zu der Installation der Applikation 102i ausgeführt wird. Dieser Prozess kann insbesondere auch nach der Installation der Applikation 102i mithilfe der installierten Applikation 102i initiiert werden.

Das Endgerät 101 ist bei der in der Figur 1 dargestellten Ausgestaltung als mobiles Kommunikationsendgerät 101, wie etwa ein Mobiltelefon, ein Smartphone, ein Tablet- oder Notebookcomputer oder dergleichen, ausgeführt, das sich über ein Zugangsnetz drahtlos mit einem Mobilfunknetz verbinden kann, um von dem Mobilfunknetz bereitgestellte Mobilfunkdienste zu nutzen. Beispiele für Dienste, die über das Mobilfunknetz bereitgestellt werden können und zu deren Nutzung das Endgerät 101 verwendet werden kann, sind Dienste für Sprach- oder Videoanrufe, Datendienste bzw. Dienste für den Zugriff auf Datennetze, wie das Internet sowie Nachrichtendienste, wie etwa SMS (Short Message Service), MMS (Multimedia Messaging Service) oder E-Mail. Für den Zugriff auf Mobilfunknetze umfasst das Endgerät 101 ein Funkmodul 103, mit dem das Endgerät 101 über das entsprechende Funkzugangsnetz mit einem Mobilfunknetz verbunden werden kann. Das Funkmodul 103 verfügt hierzu über die erforderliche Funktechnik, beispielsweise eine Antenne mit zugehörigen Peripheriekomponenten, und über eine Steuereinrichtung zur Steuerung des Funkmoduls 103 und zur Durchführung der für den Datenaustausch mit dem Mobilfunknetz bzw. dem Funkzugangsnetz notwendigen Datenverarbeitung.

Für den Zugriff auf ein Mobilfunknetz umfasst das Endgerät 101 ferner ein Identifizierungsmodul 104, welches Daten und Prozesse bereitstellt, die für den Zugriff des Endgeräts 101 auf ein Mobilfunknetz benötigt werden. Unter anderem werden von dem Identifizierungsmodul 104 bereitgestellte Daten und Prozesse für die Teilnehmeridentifizierung und -authentisierung in dem Mobilfunknetz herangezogen. Die Teilnehmeridentifizierung und - authentisierung wird üblicherweise bei der Einbuchung in ein Mobilfunknetz vorgenommen und umfasst die Identifizierung des Identifizierungsmoduls 104 anhand einer Kennung, die von dem Identifizierungsmodul 104 an das Mobilfunknetz gesendet werden, sowie die Authentisierung des Identifizierungsmoduls 104 anhand von Informationen, die in dem Identifizierungsmodul 104 unter Einsatz von vorgegebenen Algorithmen und Informationen berechnet werden. Das Identifizierungsmodul 104 verfügt über eine spezielle Sicherheitsarchitektur, die einen unautorisierten Zugriff auf Daten und Prozesse, insbesondere auf die zuvor genannten, für den Zugriff auf das Mobilfunknetz verwendeten Daten und Prozesse, verhindert.

Das Identifizierungsmodul 104 ist in einer Ausgestaltung ein gesicherter Chip, der in einer Chipkarte enthalten ist, welche lösbar in einen Kartenleser des Endgeräts 101 eingesteckt werden kann. In dieser Ausgestaltung kann es sich bei dem Identifizierungsmodul 104 um eine SIM- oder USIM-Karte handeln, die für den Zugriff auf ein Mobilfunknetz 301 verwendet wird, das als GSM (Global System for Mobile Communications)-, UMTS (Universal Mobile Telecommunications System)- oder LTE (Long Term Evolution)-Netz ausgeführt ist. Gleichfalls kann das Identifizierungsmodul 104 jedoch auch ein Chip sein, der fest in das Endgerät 101 integriert ist. Der Chip kann insbesondere auch als SIM- oder USIM-Chip ausgestaltet sein. In einer weiteren Ausgestaltung ist das Identifizierungsmodul 104 ein gesichertes Softwaremodul, das auf einem Prozessor des Endgeräts 101 ausgeführt wird, der auch für andere Aufgaben eingesetzt wird und bei dem es sich beispielsweise um den Hauptprozessor des Endgeräts 101 handeln kann.

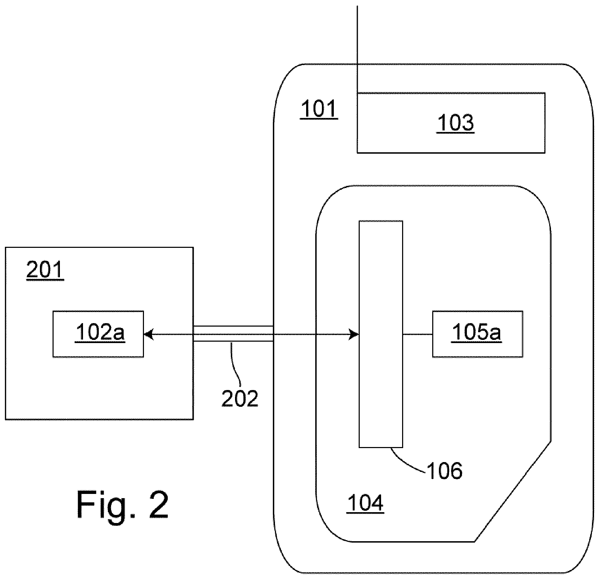

Das Identifizierungsmodul 104 ist in einem Mobilfunknetz 301 registriert, das auch als das Heimatnetz des Identifizierungsmoduls 104 bzw. des Nutzers des Endgeräts 101 bezeichnet wird und welches in der Figur 2 dargestellt ist. Bei dem Heimatnetz 301 kann es sich um das Mobilfunknetz handeln, mit dessen Betreiber der Nutzer einen Mobilfunkvertrag geschlossen hat. Von dem Betreiber des Heimatnetzes 301 oder in dessen Auftrag wird das Identifizierungsmodul 104 an den Nutzer ausgegeben und zuvor in einem sicheren Prozess vorkonfiguriert. Dies umfasst eine Personalisierung, bei der von dem Betreiber des Heimatnetzes 301 vorgegebene Daten zur Identifizierung und Authentisierung des Identifizierungsmoduls 104, von dem Betreiber vorgegebene Prozesse, wie beispielsweise bei der Authentisierung eingesetzte Verschlüsselungsalgorithmen, und weitere vom Betreiber vorgegebene Daten in dem Identifizierungsmodul 104 installiert werden.

Ferner dient das Identifizierungsmodul 104 in der dargestellten Ausgestaltung als Sicherheitsmodul zur sicheren Speicherung der in dem Endgerät 101 verfügbaren Lizenzinformationen 105i, die zur Ausführung der geschützten Applikationen 102i benötigt werden. Zur Verwaltung der gespeicherten Lizenzinformation 105i und zur Steuerung des Zugriffs auf die Lizenzinformationen verfügt das Identifizierungsmodul 104 über eine Steuerungseinheit 106. Diese ist vorzugsweise als eine in dem Identifizierungsmodul 104 installierte und ausgeführte Softwareeinheit ausgestaltet. Die Lizenzinformationen 105i sind in einer Ausgestaltung als Codes ausgeführt, die in den zugehörigen Applikationen 102i geprüft werden, um die Applikationen 102i bzw. deren geschützte Funktionen freizuschalten. Gleichfalls kann auch Steuerungseinheit 106 die Prüfung für die Applikation 102i vornehmen und das Ergebnis der Prüfung an die Applikation 102i melden.

In einer weiteren Ausgestaltung können die Lizenzinformationen auch lediglich als Flags oder dergleichen ausgestaltet sein, welche von der Steuerungseinheit 106 ausgelesen werden können, um ihr Vorhandensein an die geschützten Applikationen 102i zu melden.

Um die Lizenzinformation bzw. deren Vorhandensein zu prüfen, kann eine geschützte Applikation 102i eine entsprechende Anfrage an die Steuerungseinheit 106 senden. Zur Adressierung der Steuerungseinheit 106 können Informationen herangezogen werden, die in der Applikation 102 hinterlegt sein können. Die Steuerungseinheit 106 prüft aufgrund des Erhalts der Anfrage, ob für die anfragende geschützte Applikation 102i eine Lizenzinformation in dem Identifizierungsmodul 104 gespeichert ist. Ist dies nicht der Fall, sendet die Steuerungseinheit 106 eine Fehlermeldung an die anfragende Applikation 102i. Vorzugsweise wird diese nach dem Erhalt der Fehlermeldung nicht ausgeführt bzw. gibt diese den Zugriff auf die geschützten Funktionen nicht frei.

Wenn die Steuerungseinheit 106 ermittelt, dass für die anfragende Applikation 102i eine Lizenzinformation vorliegt, übermittelt sie diese in einer Ausführungsform, in der es sich um einen Code handelt, an die Applikation 102i, so dass diese die Lizenzinformation prüfen kann. Alternativ kann die Lizenzinformation auch in der Steuerungseinheit 106 geprüft werden. Die Prüfung kann beispielsweise anhand eines Vergleichs der vorhandenen Lizenzinformation 105i mit einer Referenzinformation, die in der Applikation gespeichert ist, vorgenommen werden. Um eine Prüfung in der Steuerungseinheit 106 zu ermöglichen, können die Referenzinformationen zuvor von der Applikation an die Steuerungseinheit 106 übermittelt werden. In Abhängigkeit von dem Ergebnis der Prüfung der Lizenzinformationen wird die Applikation 102i sodann ausgeführt bzw. gibt diese den Zugriff auf die geschützten Funktionalitäten frei. Die Ausführung bzw. Freigabe erfolgt dabei dann, wenn die Gültigkeit der vorhandenen Lizenzinformationen 105i festgestellt worden ist. Andernfalls wird die Applikation 102i nicht ausgeführt bzw. die Freigabe der geschützten Funktionalitäten unterbleibt.

Falls es sich bei der Lizenzinformation 105i um ein Flag handelt, wird von der Steuerungseinheit 106 lediglich dessen Vorhandensein an die anfragende Applikation 102i gemeldet, die daraufhin genauso verfährt, wie zuvor für den Fall einer erfolgreichen Prüfung der Lizenzinformation 105i beschrieben.

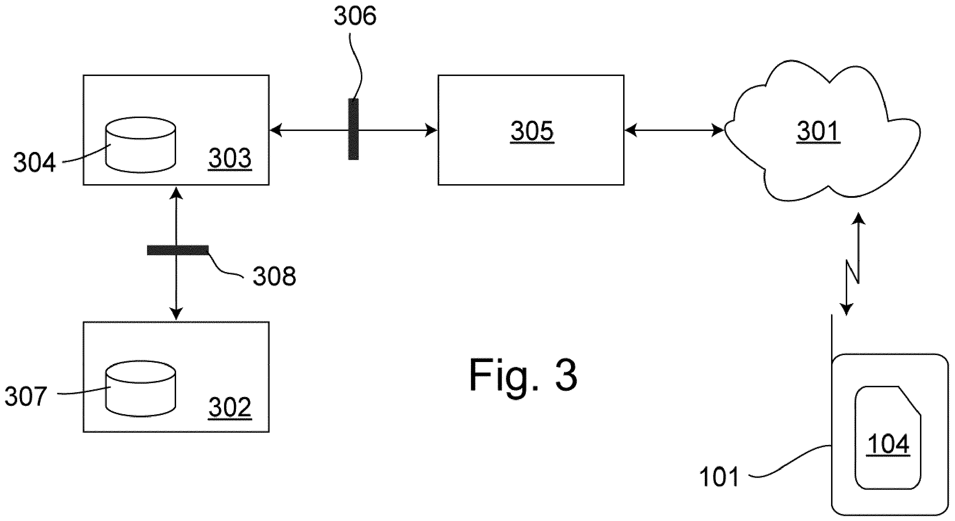

Somit kann die Ausführung von geschützten Applikationen in dem Kommunikationsendgerät 101 anhand von Lizenzinformationen in dem Identifizierungsmodul 104 des Kommunikationsendgeräts freigeschaltet werden. Zur Ausführung von Applikationen kann anstelle des Endgeräts 101 in weiteren Ausgestaltungen auch ein weiteres Gerät 201 vorgesehen sein, das mit dem Kommunikationsendgerät 101 verbunden ist, wie es wie es beispielhaft für die Applikation 102a in der Figur 3 veranschaulicht ist. Bei dem Gerät 201 kann es sich beispielsweise um einen PC oder eine anderen Einrichtung zur Ausführung von Applikationen 102i handeln. Über eine Kommunikationsverbindung 202 ist das Gerät 201 mit dem Endgerät 101 verbunden. Die Kommunikationsverbindung 202 besteht vorzugsweise temporär und kann als eine drahtgebundene oder als drahtlose Kommunikationsverbindung ausgestaltet sein. Eine drahtlose Kommunikationsverbindung, die in der Regel eine für den Nutzer einfachere Verbindung der Geräte ermöglicht als eine drahtgebundene Kommunikationsverbindung, kann als Funkverbindung ausgestaltet sein, beispielsweise als Bluetooth-, NFC (Near Field Communication)- oder ZigBee-Verbindung. Ein als Middleware ausgestaltetes Programm des weiteren Geräts 201 kann der Applikation 102a den Zugriff auf die Kommunikationsverbindung 202 bzw. auf eine Schnittstelle des weiteren Geräts 201, über welche die Kommunikationsverbindung 202 hergestellt wird, ermöglichen.

Zur Prüfung des Vorhandenseins der zugehörigen Lizenzinformation 105a kommuniziert die Applikation 102a in einer Ausgestaltung über die Kommunikationsverbindung 202 mit der Steuerungseinrichtung 106 des Identifizierungsmoduls 104. Insbesondere sendet die Applikation 102a über die Kommunikationsverbindung 202 eine entsprechende Anfrage an die Steuerungseinrichtung 106, welche von der Steuerungseinrichtung 106 beantwortet wird. Die Antwort der Steuerungseinrichtung 106 wird über die Kommunikationsverbindung 202 an die Applikation 106 zurückgesendet. Die Anfrage und die Antwort sind grundsätzlich in der gleichen Weise ausgestaltet, wie zuvor im Zusammenhang mit Applikationen 102i beschrieben wurde, die in dem Kommunikationsendgerät 101 ausgeführt werden. Die Bearbeitung der Anfrage der Applikation in der Steuerungseinrichtung 106 erfolgt ebenfalls in der zuvor bereits beschriebenen Weise.

Somit kann das Kommunikationsendgerät 101 bzw. das enthaltene Identifizierungsmodul 104 auch für die Freischaltung einer geschützten Applikation 102a in weiteren Geräten 201 verwendet werden. Der Nutzer der Applikationen 102a sorgt zu diesem Zweck dafür, dass die Kommunikationsverbindung zwischen dem weiteren Gerät 201 und dem Kommunikationsendgerät 101 hergestellt wird. In der Ausgestaltung als mobiles Kommunikationsendgerät 101, das der Nutzer mit sich führen kann, lassen sich temporäre Kommunikationsverbindung 201 zu verschiedenen weiteren Geräten 201 herstellen, die an verschiedenen Standorten betrieben werden. So können mit dem Identifizierungsmodul 104 Applikationen 102a freigeschaltet werden, die in unterschiedlichen weiteren Geräten 201 ausgeführt werden.

In der Figur 2 ist schematisch ein System veranschaulicht, in dem die Lizenzinformationen 105i über das Mobilfunknetz 301 in dem Identifizierungsmodul 104 sowie weiteren Identifizierungsmodulen 104 hinterlegt werden können und in dem Identifizierungsmodul (104) hinterlegte Lizenzinformation 105i gelöscht bzw. als ungültig markiert werden können, so dass sie nicht zur Freigabe einer geschützten Applikation 102i bzw. von geschützten Funktionen einer solchen verwendet werden können. Die Hinterlegung und das Löschen können in dem in der Figur 2 veranschaulichten System von einem Lizenzserver 302 gesteuert werden. Es versteht sich, dass dies in gleicher Weise für eine Vielzahl von Endgeräten 101 bzw. Identifizierungsmodulen 104 durchgeführt werden kann und nicht auf das veranschaulichte Identifizierungsmodul 104 beschränkt ist, welches in der Figur 2 exemplarisch gezeigt ist.

Der Lizenzserver 302 wird von der Organisation betrieben, welche die Lizenzinformationen ausgibt. Hierbei kann es sich um dieselbe Organisation handeln, welche auch die Applikationen 102i bereitstellt. Der Betreiber des Lizenzservers 302 kann die Funktionalitäten des Lizenzservers 302 jedoch gleichfalls einer oder mehrerer die Applikationen 102i bereitstellender Organisationen anbieten, welche somit den Lizenzserver 302 zur Hinterlegung und/oder für das Löschen von Lizenzinformationen 105i nutzen können. In einer Ausgestaltung wird der Lizenzserver 302 von dem Betreiber des Mobilfunknetzes 301 betrieben, um Lizenzinformation 105i für Applikationen 102i in Identifikationsmodulen zu hinterlegen bzw. hinterlegte Lizenzinformationen 105i zu löschen bzw. als ungültig zu markieren.

Der Lizenzserver 302 kann über eine Lizenzdatenbank 307 zur Verwaltung der an die Nutzer von Endgeräten 101 ausgegebenen Lizenzinformationen verfügen, in der die Identifizierungsmodule 104, in denen Lizenzinformationen 105i gespeichert sind, in Zuordnung zu den Lizenzinformationen 105i registriert sind. Die Installation der Lizenzinformationen kann vom Lizenzserver 302 gesteuert werden, wie im Folgenden noch genauer beschrieben wird, wobei die Lizenz aufgrund der Ausgabe durch den Lizenzserver 302 in der Lizenzdatenbank 307 registriert wird. Gleichfalls kann eine Lizenzinformation 105i auch in anderer Weise in einem Identifizierungsmodul 104 gespeichert werden. Beispielsweise kann die Lizenz bereits bei der Herstellung oder Personalisierung des Identifizierungsmoduls 104 oder bei einer nach der Ausgabe des Identifizierungsmoduls 104 erfolgenden Konfiguration in diesem gespeichert werden. Sofern die Installation der Lizenzinformation 105i nicht von dem Lizenzserver 302 gesteuert wird, wird die Ausgabe der Lizenzinformation 105i sowie der Nutzer, der aufgrund der Lizenz zur Nutzung einer Applikation berechtigt ist, bzw. das zugehörige Identifizierungsmodul 104 an den Lizenzserver 302 gemeldet und ebenfalls in der Lizenzdatenbank 307 registriert.

Die Installation einer Lizenzinformation 105i für eine in dem Endgerät 101 oder in dem weiteren Gerät 201 installierte Applikation kann aufgrund des Erwerbs einer Lizenz durch den Nutzer des Endgeräts 101 erfolgen. Die Lizenz kann gleichzeitig mit der Applikation 102i erworben werden, wenn diese in dem Endgerät 101 oder in dem weiteren Gerät 201 installiert wird, oder separat beispielsweise nach der Installation mittels einer entsprechenden Funktion der Applikation 102i. Der Erwerb der Lizenz kann in geeigneter Weise über den Lizenzserver 302 oder über eine mit dem Lizenzserver 302 gekoppelte Einrichtung vorgenommen werden und mit der Entrichtung einer Lizenzgebühr verbunden sein, die der Nutzer für die Nutzung der Applikation entrichtet. Gleichfalls kann die Lizenz beispielsweise zusammen mit der Subskription des Nutzers in seinem Heimatnetz 301 erworben werden, wobei die Lizenzinformationen insbesondere in diesem Fall bereits bei der Personalisierung in dem Identifizierungsmodul 104 gespeichert werden können.

In einer Ausgestaltung ist die Lizenz des Nutzers für die Nutzung einer geschützten Applikation 102i befristet und läuft nach Ablauf einer vorgegebenen Gültigkeitsfrist, die in der Lizenzdatenbank 307 gespeichert ist, ab. Von dem Nutzer kann die Lizenz vorzugsweise verlängert werden, wobei Verlängerung mit der Zahlung weiterer Lizenzgebühren verbunden sein kann. Zur Durchführung der Verlängerung kann eine entsprechende Funktion von der geschützten Applikation 102i bereitgestellt werden, mittels der die Verlängerung anhand einer Kommunikation mit dem Lizenzserver 302 oder einer mit dem Lizenzserver 302 gekoppelten Einrichtung, welche die Verlängerung der Lizenz an den Lizenzserver 302 meldet, abgewickelt werden kann. Gleichfalls kann die Verlängerung auch unabhängig von der Applikation über den Lizenzserver 302 oder die hierfür vorgesehene mit dem Lizenzserver 302 gekoppelte Einrichtung abgewickelt werden. Nach der Durchführung einer Verlängerung der Lizenz wird die neue Gültigkeitsfrist der Lizenz in der Lizenzdatenbank 307 des Lizenzservers 302 hinterlegt, wobei sie die ursprüngliche Gültigkeitsfrist ersetzt.

Die in der Lizenzdatenbank 307 hinterlegten, maßgeblichen Gültigkeitsfristen für die registrierten Lizenzen werden von dem Lizenzserver 302 überwacht. Wenn der Lizenzserver 302 feststellt, dass die Gültigkeitsfrist für eine Lizenz zur Nutzung einer geschützten Applikation 102i abläuft, veranlasst der Lizenzserver 302 die Übermittlung einer Löschungsnachricht an das Identifizierungsmodul 104, in dem die zu der Lizenz gehörende Lizenzinformation 105i gespeichert ist, so dass die Lizenzinformationen 105i verworfen werden. Infolgedessen kann der Nutzer die geschützten Applikationen nach Ablauf der Gültigkeitsfrist nicht mehr nutzen. Sofern der Nutzer die Lizenz hingegen vor Ablauf der Gültigkeitsfrist verlängert und vor Ablauf der geltenden Gültigkeitsfrist eine neue Gültigkeitsfrist in der Lizenzdatenbank 307 hinterlegt wird, kann die Übermittlung der Löschungsnachricht unterbleiben, so dass die in dem Identifizierungsmodul 104 gespeicherte Lizenzinformation 105i weiterhin verwendbar ist.

In einer weiteren Ausgestaltung sind Lizenzen für geschützte Applikationen 102i zusätzlich oder alternativ zur zeitlichen Bindung an Gültigkeitsfristen an andere Bedingungen geknüpft. So kann es beispielsweise erforderlich sein, dass der Nutzer des Endgeräts 101 im Heimatnetz 301 eine Subskription eines bestimmten Typs besitzt, um zur Nutzung einer geschützten Applikation 102i berechtigt zu sein. Solange die Bedingung vorliegt, ist die Lizenz zur Nutzung der geschützten Applikation 102i gültig. Wenn die Bedingung hingegen nicht mehr erfüllt ist, beispielsweise aufgrund einer Änderung der Subskription des Nutzers, verliert die Lizenz des Nutzers ihre Gültigkeit. Aufgrund der Beendigung der Gültigkeit der Lizenz wird von dem Lizenzserver 302 eine Löschungsnachricht an das Identifizierungsmodul 104 des Nutzers gesendet, in dem die zu der Lizenz gehörende Lizenzinformation 105i gespeichert ist, so dass die Lizenzinformation 105i verworfen wird. Die Beendigung der Gültigkeit der Lizenz aufgrund der Beendigung der Gültigkeitsbedingung kann in dem Lizenzserver 302 festgestellt werden oder in einer weiteren mit dem Lizenzserver 302 verbundene Einrichtung, die den Lizenzserver 302 zur Übermittlung der Löschungsnachricht anweist, wenn sie die Beendigung der Gültigkeit feststellt. Die Einrichtung kann beispielsweise zur Verwaltung von Subskriptionen in dem Mobilfunknetz 301 vorgesehen sein und die Beendigung der Gültigkeit dann feststellen, wenn die Subskription für einen Nutzer geändert oder gelöscht wird.

Zur Hinterlegung von Lizenzinformationen 105i in den Identifizierungsmodulen 104 durch den Lizenzserver 302 und für die Übermittlung von Löschungsnachrichten an die Identifizierungsmodule 104 wird vorzugsweise ein in den Identifizierungsmodulen 104 implementierter Mechanismus für den Fernzugriff eingesetzt. Ein solcher Mechanismus ermöglicht, nach der Ausgabe drahtlos auf die in dem Mobilfunknetz 301 registrierten Identifizierungsmodule 104 zuzugreifen, um Anpassungen vorzunehmen. Beispielsweise können Daten und Prozesse bzw. Programme in dem Identifizierungsmodul 104 per Fernzugriff verändert, ergänzt oder gelöscht werden. Mittels des Fernzugriffsmechanismus' können derartige Anpassungen vorgenommen werden, ohne dass die Identifizierungsmodule 104 in einer Servicestelle des Mobilfunkbetreibers oder eines anderen Anbieters angepasst oder neu ausgegeben werden müssen.

Bei der in der Figur 2 veranschaulichten Ausführungsform handelt es sich bei dem Fernzugriffsmechanismus um einen OTA-Mechanismus, bei dem ein OTA-Server 303 Nachrichten an registrierte Identifizierungsmodule 104 senden kann, die Daten zur Installation in den Identifizierungsmodulen 104 und/oder Befehle zur Änderung von Daten oder zur Ausführung von Prozessen und Programmen in den Identifizierungsmodulen 104 enthalten sein können. Der OTA-Server 303 kann in dem Mobilfunknetz 301 angeordnet sein und beispielsweise von dem zugehörigen Mobilfunkanbieter betrieben werden, wobei in dem OTA-Server 303 sämtliche Identifizierungsmodule 104 registriert sein können, denen das Mobilfunknetz 301 als Heimatnetz zugeordnet ist oder eine Auswahl aus diesen Identifizierungsmodulen 104. Gleichfalls kann der OTA-Server 303 jedoch auch außerhalb des Mobilfunknetzes 301 von einer vertrauenswürdigen Organisation und/oder mit einer beliebig vorgegebenen Auswahl von registrierten Identifizierungsmodulen 104 betrieben werden.

Zur Sicherung des Fernzugriffs auf die Identifizierungsmodule 104 und vor allem zum Schutz vor unberechtigten Zugriffen auf die Identifizierungsmodule 104 werden kryptographische Mechanismen eingesetzt. Die von dem OTA-Server 303 an ein Identifizierungsmodul 104 gesendeten Nachrichten, die auch OTA-Nachrichten bezeichnet werden, sind mit einem kryptographischen Schlüssel verschlüsselt, um sie vor unberechtigten Manipulationen auf dem Transportweg zu schützen und zu verhindern, dass unberechtigte Dritte gültige OTA-Nachrichten an ein Identifizierungsmodul 104 senden können. In dem Identifizierungsmodul 104 werden empfangene OTA-Nachrichten mit einem entsprechenden kryptographischen Schlüssel entschlüsselt. Mit der Entschlüsselung wird zudem auch die Authentizität der Nachricht geprüft, da die Nachricht nur dann erfolgreich entschlüsselt werden kann, wenn sie mit dem korrekten, nur im OTA-Server 303 hinterlegten, Schlüssel verschlüsselt worden ist.

Die in dem OTA-Server 303 zur Verschlüsselung verwendeten Schlüssel und die in den Identifizierungsmodulen 104 zur Entschlüsselung verwendeten Schlüssel, die hierin auch als OTA-Schlüssel bezeichnet werden, können jeweils ein symmetrisches Schlüsselpaar bilden. Gleichfalls kann jedoch auch die Verwendung von asymmetrischen Schlüsselpaaren vorgesehen sein. Der in einem Identifizierungsmodul 104 verwendete OTA-Schlüssel kann bei der Herstellung oder Personalisierung des Identifizierungsmoduls 104 in diesem hinterlegt werden. Die Kennung, unter der die den Identifizierungsmodulen 104 zugeordneten kryptographischen Schlüssel jeweils in der Datenbank 304 des OTA-Servers 303 hinterlegt sind, kann eine als MSISDN (Mobile Subscriber Integrated Services Digital Network Number) ausgestaltete, dem betreffenden Identifizierungsmodul 104 zugeordnete Rufnummer umfassen, die auch zur Adressierung der OTA-Nachrichten an das Identifizierungsmodul 104 herangezogen werden kann. Zusätzlich oder alternativ können die Kennungen auch andere den Identifizierungsmodulen 104 zugeordnete Identifizierungscodes umfassen. Sofern in den verwendeten Kennungen die den Identifizierungsmodulen zugeordneten MSISDNs nicht enthalten sind, sind diese vorzugsweise zusätzlich in der Datenbank 304 des OTA-Servers 303 hinterlegt, um von dem OTA-Server 303 zur Adressierung von OTA-Nachrichten an die Identifizierungsmodule 104 verwendet werden zu können. Alternativ können die Rufnummern an den OTA-Server 303 übergeben werden, wenn dieser angewiesen wird, eine OTA-Nachricht an ein Identifizierungsmodul 104 zu senden.

Die OTA-Nachrichten werden über einen in dem Mobilfunknetz 301 bereitgestellten Datenübertragungsdienst übertragen. Insbesondere kann ein Kurznachrichtendienst verwendet werden, bei dem es sich in einer Ausgestaltung um den an sich bekannten SMS (Short Message Service) handelt. Bei dem SMS werden Kurznachrichten von einem SMSC (Short Message Service Center) 305 des Mobilfunknetzes 301 an mit dem Mobilfunknetz 301 verbundene Endgeräte 101 gesendet.

Zur Übertragung von OTA-Nachrichten besitzt der OTA-Server 303 eine SMS-Schnittstelle 306, über die er mit dem SMSC 305 verbunden ist. Um eine OTA-Nachricht an ein Identifizierungsmodul 104 zu übertragen, übergibt der OTA-Server 303 über die SMS-Schnittstelle 306 den mit dem OTA-Schlüssel des Identifizierungsmoduls 104 verschlüsselten Inhalt der OTA-Nachricht zusammen mit der dem Identifizierungsmodul 104 zugeordneten MSISDN an das SMSC 305. Das SMSC 305 sendet daraufhin eine als SMS-Nachricht ausgestaltete OTA-Nachricht unter Verwendung der dem Identifizierungsmodul 108 zugeordneten Rufnummer an das Endgerät 101, mit dem das Identifizierungsmodul verbunden ist. Dies geschieht grundsätzlich in der gleichen Weise wie die Übermittlung anderer SMS-Nachrichten an das Endgerät 101. Die OTA-Nachricht wird aufgrund eines enthaltenen besonderen Kennzeichens in dem Endgerät 101 vorzugsweise transparent, d.h. unsichtbar für den Nutzer des Endgeräts 101, an das Identifizierungsmodul 108 weitergeleitet und in dem Identifizierungsmodul 104 zunächst entschlüsselt und dabei, wie zuvor erläutert, auch mittels des OTA-Schlüssel des Identifizierungsmoduls 104 authentisiert. Nach erfolgreicher Entschlüsselung wird die Nachricht ausgewertet und darin enthaltene Steuerbefehle werden ausgeführt.

In dem in der Figur 2 veranschaulichten System ist eine Schnittstelle 308 zwischen dem OTA-Server 303 und dem Lizenzserver 302 vorgesehen, über die der Lizenzserver 302 mit dem OTA-Server 303 kommunizieren und Funktionalitäten des OTA-Servers 303 nutzen kann. Die Schnittstelle 308 kann von dem Lizenzserver 302 verwendet werden, um Lizenzinformationen 105i in Identifizierungsmodulen 104 zu installieren. Zur Installation (d.h. zur Hinterlegung) einer Lizenzinformation 105i für eine geschützte Applikation 102i wird eine als OTA-Nachricht ausgestaltete Installationsnachricht an das Identifizierungsmodul 104 gesendet. Hierzu übergibt der Lizenzserver 302 über die Schnittstelle 308 an den OTA-Server 303 eine entsprechende Anweisung zur Erzeugung einer OTA-Nachricht mit einem Steuerbefehl zur Hinterlegung einer Lizenzinformation 105i für die Applikation 102i an den OTA-Server. Der Steuerbefehl kann zur Einfügung in die Installationsnachricht von dem Lizenzserver 302 übergeben werden. Ferner wird vorzugsweise die geschützte Applikation 102i in der OTA-Nachricht anhand einer Bezeichnung spezifiziert, die von dem Lizenzserver 302 an den OTA-Server 303 übergeben wird. Wenn die Lizenzinformation einen Code umfasst, dann wird dieser gleichfalls von dem Lizenzserver 302 an den OTA-Server 303 übergeben. Zudem übermittelt der Lizenzserver 302 die Anweisung zur Erzeugung der Installationsnachricht an den OTA-Server 303 zusammen mit einer Angabe des Identifizierungsmoduls 104, an welches die Nachricht zu übermitteln ist. Hierzu kann der Lizenzserver 302 die Kennung an den OTA-Server 303 registriert ist.

Nachdem der OTA-Server 303 die Anweisung zusammen mit den zuvor genannten Informationen erhalten hat, erzeugt der OTA-Server eine OTA-Nachricht, welche den Steuerbefehl zur Hinterlegung einer Lizenzinformation sowie ggf. den in der Lizenzinformation enthaltenen Code enthält. Zudem übernimmt der OTA-Server 303 vorzugsweise die von dem Lizenzserver 302 erhaltene Bezeichnung der geschützten Applikation 102i in die OTA-Nachricht. Die OTA-Nachricht wird mit dem OTA-Schlüssel verschlüsselt, der dem von dem Lizenzserver 302 angegebenen Identifizierungsmodul 104 zugeordnet ist und von dem OTA-Server 303 anhand der von dem Lizenzserver 302 übergebenen Kennung des Identifizierungsmoduls 104 in der Datenbank 304 des OTA-Servers 303 ermittelt wird. Nach ihrer Erzeugung wird die OTA-Nachricht an das Identifizierungsmodul 104 bzw. das Endgerät 101 gesendet, in dem das Identifizierungsmodul 104 enthalten ist. Hierzu übergibt der OTA-Server 303 die Nachricht zusammen mit der dem Identifizierungsmodul 104 zugeordneten Rufnummer an das SMSC 305, welches die Nachricht unter Verwendung der Rufnummer versendet.

Wenn die Installationsnachricht in dem Endgerät 101 empfangen wird, wird sie von dem Funkmodul 103 an das Identifizierungsmodul 104 übergeben. Das Identifizierungsmodul 104 erkennt anhand einer Kennung, dass es sich um eine OTA-Nachricht handelt und entschlüsselt die Nachricht mithilfe des in dem Identifizierungsmodul 104 vorhandenen OTA-Schlüssels. Wenn die Installationsnachricht erfolgreich entschlüsselt worden ist, wird sie in dem Identifizierungsmodul 104 ausgewertet. Hierbei erkennt das Identifizierungsmodul 104 den enthaltenen Steuerbefehl zur Hinterlegung der Lizenzinformation 105i und führt diesen aus. Hierbei wird die Lizenzinformation 105i für die in der Installationsnachricht angegebenen geschützten Applikation so in dem Identifizierungsmodul 104 hinterlegt, dass sie von der Steuerungseinheit 106 auf eine Anfrage der Applikation an diese geliefert werden kann. Wenn die Lizenzinformation 105i ein Flag enthält, wird dieses entsprechend gesetzt. Wenn ein Code enthalten ist, wird dieser entsprechend in dem Identifizierungsmodul 104 gespeichert, so dass er von der Steuerungseinheit 106 zur Prüfung an die gesicherte Applikation übergeben werden kann, wenn diese eine entsprechende Anfrage an die Steuerungseinheit 106 stellt.

Die Hinterlegung der Lizenzinformation 105i kann optional durch eine in dem Identifizierungsmodul 104 automatisch erzeugte Bestätigungsnachricht an den Lizenzserver 302 bestätigt werden. Die Nachricht kann ebenfalls mittels des SMS über das SMSC an den Lizenzserver 302 übermittelt werden. Gleichfalls kann ein anderer Nachrichtendienst zur Übermittlung der Bestätigungsnachricht eingesetzt werden. Die Bestätigungsnachricht kann mittels des OTA-Schlüssels des Identifizierungsmoduls 104 verschlüsselt werden. In diesem Fall wird die Nachricht zunächst an den OTA-Server 303 übermittelt, der sie mit dem OTA-Schlüssel, der dem Identifizierungsmodul 104 zugeordnet ist, entschlüsselt, und den entschlüsselten Inhalt an den Lizenzserver 302 weiterleitet. Alternativ kann jedoch auch eine andere Verschlüsselung vorgesehen sein oder auf eine Verschlüsselung verzichtet werden.

In der zuvor beschriebenen Weise kann eine Lizenzinformation 105i in einem Identifizierungsmodul 104 hinterlegt werden. Weitere Möglichkeiten zur Hinterlegung einer Lizenzinformation 105i in dem Identifizierungsmodul 104 wurden zuvor bereits beschrieben und umfassen eine Hinterlegung bei der Personalisierung des Identifizierungsmoduls 104 oder bei der Konfiguration eines Identifizierungsmoduls 104 in einer Servicestelle.

Nachdem eine Lizenzinformation 105i in einem Identifizierungsmodul 104 hinterlegt worden ist, kann sie, wie bereits beschrieben, mittels einer Löschungsnachricht gelöscht oder als ungültig markiert werden.

Die Übermittlung einer Löschungsnachricht wird vorzugsweise ebenfalls von dem Lizenzserver 302 veranlasst. Dies kann beispielsweise dann geschehen, wenn der Lizenzserver 302 feststellt oder an den Lizenzserver 302 gemeldet wird, dass die Gültigkeit einer Lizenz eines Nutzers zur Nutzung einer geschützten Applikation beendet ist. Der Lizenzserver 302 übergibt an den OTA-Server 303 über die Schnittstelle 308 eine Anweisung zur Erzeugung einer Löschungsnachricht. Ein entsprechender Löschungsbefehl, der in die Löschungsnachricht aufgenommen wird, kann mit der Anweisung von dem Lizenzserver 302 übergeben oder bereits in dem OTA-Server 303 hinterlegt sein. Bei der Übergabe der Anweisung spezifiziert der Lizenzserver 302 die geschützte Applikation 102i, auf die sich die zu verwerfende Lizenz bezieht. Hierzu kann die Bezeichnung der Applikation 102i übergeben werden, unter der die zugehörige Lizenzinformation in dem Identifizierungsmodul 104 gespeichert ist oder die Ermittlung der Applikation bzw. der Lizenzinformation in dem Identifizierungsmodul 104 ermöglicht. Zudem wird bei der Übermittlung der Anweisung an den OTA-Server 303 das Identifizierungsmodul 104 spezifiziert, in dem die zu verwerfende Lizenzinformation gespeichert ist. Hierzu kann wiederum zusammen mit der Anweisung die Kennung übergeben werden, unter der das Identifizierungsmodul 104 in dem OTA-Server registriert ist und bei der es sich, wie zuvor beschrieben, um die Rufnummer des Identifizierungsmoduls 104 handeln kann.

Nachdem der OTA-Server 303 eine Anweisung zur Erzeugung einer Löschungsnachricht zusammen mit den zuvor genannten Informationen über die Schnittstelle von dem Lizenzserver 302 erhalten hat, erzeugt der OTA-Server 303 eine OTA-Nachricht, welche den Löschungsbefehl sowie die Bezeichnung der geschützten Applikation 102i, auf welche sich die zu verwerfende Lizenzinformation bezieht, umfasst. Die OTA-Nachricht wird mit dem OTA-Schlüssel des zu adressierenden Identifizierungsmoduls 104 verschlüsselt. Dieser Schlüssel wird anhand der von dem Lizenzserver 302 erhaltenen Angabe zur Spezifizierung des Identifizierungsmoduls 104 in der Datenbank 304 des OTA-Servers 303 ermittelt. Die verschlüsselte Löschungsnachricht wird von dem OTA-Server 303 zusammen mit der Rufnummer an das SMSC 305 übergeben, die zur Adressierung der Löschungsnachricht herangezogen wird. Von dem SMSC 305 wird die Löschungsnachricht dann über das Mobilfunknetz 301 unter Verwendung der erhaltenen Rufnummer an das Identifizierungsmodul 104 bzw. das Endgerät 101 übermittelt, in welches das Identifizierungsmodul 104 eingesetzt ist.

Die Löschungsnachricht wird dann mittels des zur Übertragung verwendeten Nachrichtendienstes, insbesondere des SMS, in der dem Fachmann an sich bekannter Weise zu dem Endgerät 101 übertragen und mittels des Funkmoduls 103 des Endgeräts 101 empfangen. Sodann wird die Löschungsnachricht an das Identifizierungsmodul 104 des Endgeräts 101 übergeben und in dem Identifizierungsmodul 104 als OTA-Nachricht erkannt. Aufgrund dessen wird die Nachricht mit dem in dem Identifizierungsmodul 104 hinterlegten OTA-Schlüssel entschlüsselt. Nach erfolgreicher Entschlüsselung wertet das Identifizierungsmodul 104 den Inhalt der Nachricht aus und erkennt dabei den Löschungsbefehl, der daraufhin ausgeführt wird. Hierzu wird anhand der in der Nachricht enthaltenen Bezeichnung der geschützten Applikation 102i die zu verwerfende Lizenzinformation 105i ermittelt. Hierzu wird die Lizenzinformation 105i ermittelt, die für die in der Löschungsnachricht spezifizierte Applikation 102i in dem Identifizierungsmodul 104 gespeichert ist. Diese Lizenzinformation 105i wird daraufhin in einer Ausführungsform gelöscht. Sofern es sich bei der Lizenzinformation 105i um ein gesetztes Flag handelt, wird dieses entfernt. Wenn die Lizenzinformation einen in dem Identifizierungsmodul 104 gespeicherten Code umfasst, wird dieser gelöscht. In einer weiteren Ausführungsform bleibt der Code in dem Identifizierungsmodul 104 gespeichert, wird jedoch als ungültig markiert. Dies erlaubt beispielsweise die spätere Ermittlung, dass eine gültige Lizenzinformation für die betreffende geschützte Applikation in dem Identifizierungsmodul 104 gespeichert war.

Das Löschen der Lizenzinformation 105i oder die Markierung als ungültig kann durch eine in dem Identifizierungsmodul 104 automatisch erzeugte Bestätigungsnachricht an den Lizenzserver 302 bestätigt werden. Die Nachricht kann ebenfalls mittels des SMS über das SMSC an den Lizenzserver 302 übermittelt werden. Gleichfalls kann ein anderer Nachrichtendienst zur Übermittlung der Bestätigungsnachricht eingesetzt werden. Die Bestätigungsnachricht kann mittels des OTA-Schlüssels des Identifizierungsmoduls 104 verschlüsselt werden. In diesem Fall wird die Nachricht zunächst an den OTA-Server 303 übermittelt, der sie mit dem OTA-Schlüssel, der dem Identifizierungsmodul 104 zugeordnet ist, entschlüsselt, und den entschlüsselten Inhalt an den Lizenzserver 302 weiterleitet. Gleichfalls kann die Bestätigungsnachricht jedoch auch in anderer Weise verschlüsselt werden oder es kann auf eine Verschlüsselung verzichtet werden.

Aufgrund des Löschens einer Lizenzinformation 105i oder der Markierung als ungültige Lizenzinformation 105i, kann die geschützte Applikation bzw. können deren geschützten Funktionen zukünftig nicht mehr in dem Endgerät 101 oder in dem weiteren Gerät 201 ausgeführt werden. Wenn die Applikation 102i zur Prüfung des Vorhandenseins einer Lizenzinformation 105i eine entsprechende Anfrage an die Steuerungseinheit 106 sendet, so sendet diese eine Fehlermeldung an die Applikation 102i zurück. Wie zuvor beschrieben, wird daraufhin die geschützte Applikation 102i nicht ausgeführt bzw. der Zugriff auf die geschützten Funktionen der Applikation 102i wird nicht freigegeben.

Nachdem eine Lizenzinformation 105i für eine geschützte Applikation in der zuvor beschriebenen Weise aufgrund des Empfangs einer Löschungsnachricht verworfen worden ist, kann für dieselbe Applikation 102i erneut eine gültige Lizenzinformation 105i in dem Identifizierungsmodul 104 hinterlegt werden, wenn dies gewünscht ist. Hierzu kann insbesondere eine entsprechende Installationsnachricht an das Identifizierungsmodul 104 gesendet werden. Dies kann beispielsweise vorgenommen werden, wenn der Nutzer erneut eine Lizenz für die Nutzung der geschützten Applikation 102i erwirbt.

Eine weitere Ausgestaltung unterscheidet sich von den zuvor beschriebenen Ausgestaltungen dadurch, dass eine Löschungsnachricht nicht deswegen an ein Identifizierungsmodul 104 gesendet wird, weil die Lizenz für die Nutzung einer geschützten Applikation 102i beendet ist, sondern weil eine Lizenzinformation 105i aus anderen Gründen gelöscht werden soll. Ein Beispiel hierfür ist ein Austausch der in dem Identifizierungsmodul 104 gespeicherten Lizenzinformation 105i mit einem ersten Code durch eine neue Lizenzinformation 105i mit einem zweiten Code. Ein solcher Austausch kann zur Erhöhung der Sicherheit gegen eine unberechtigte Nutzung von Applikationen 102i vorgesehen sein. Um einen solchen Austausch vorzunehmen, kann zunächst eine von dem Lizenzserver 302 initiierte Löschungsnachricht an das Identifizierungsmodul 104 gesendet werden, die dazu führt, dass die in dem Identifizierungsmodul 104 gespeicherte Lizenzinformation 105i mit dem ersten Code verworfen wird. Sodann kann eine von dem Lizenzserver 302 initiierte Installationsnachricht zur Installation einer Lizenzinformation 105i mit dem zweiten Code an das Identifizierungsmodul 104 gesendet werden. Die Installationsnachricht kann beispielsweise gesendet werden, nachdem das Identifizierungsmodul 104 das Verwerfen der alten Lizenzinformation bestätigt hat.
In der zuvor beschriebenen Weise können Lizenzinformationen für die Nutzung von geschützten Applikationen 102i in einem Identifizierungsmodul 104 hinterlegt und hinterlegte Lizenzinformationen gelöscht werden. Weitere Ausgestaltungen unterscheiden sich hiervon dadurch, dass die Lizenzinformationen für die Nutzung von geschützten Inhalten, insbesondere von Multimediainhalten, wie etwa Video- und/oder Audioinhalten, die in dem Endgerät 101 oder dem weiteren Geräte 201 gespeichert sind, vorgesehen sein können. Hierbei kann vorgesehen sein, dass eine Applikation zur Wiedergabe der Inhalte mit der Steuereinheit 106 des Identifizierungsmoduls 104 kommuniziert und beim Zugriff auf geschützte Inhalte prüft, ob für die Inhalte die erforderlichen Lizenzinformationen vorliegen. Dies kann in dergleichen Weise geschehen, wie die Prüfung des Vorhandenseins einer Lizenzinformation durch eine geschützte Applikation 102i. Die Lizenzinformationen für die Nutzung von geschützten Inhalten in dem Endgerät 101 oder in dem weiteren Gerät 201 können in gleicher Weise in dem Identifizierungsmodul 104 hinterlegt werden, insbesondere mittels einer Installationsnachricht, und aufgrund des Empfangs einer Löschungsnachricht verworfen werden. Die Nachrichten sind in gleicher Weise aufgebaut wie die zuvor beschriebenen Installations- und Löschungsnachricht, wobei jedoch anstelle einer geschützten Applikation 102i die geschützten Inhalte, insbesondere die betreffenden Multimediadateien, in den Nachrichten spezifiziert werden.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt.

So müssen die Lizenzinformationen 105i beispielsweise nicht in einem Identifizierungsmodul 104 gespeichert werden, sondern können auch in einem anderen Sicherheitsmodul in dem Endgerät hinterlegt sein, insbesondere in einem Sicherheitsmodul, das speziell für die Speicherung von Lizenzinformationen vorgesehen ist. Ein solches kann als separater Chip ausgestaltet sein oder als ein Softwaremodule, welches auf einem Prozessor des Endgeräts ausgeführt wird. Derartige Sicherheitsmodule können insbesondere in Endgeräten eingesetzt werden, die nicht über ein Identifizierungsmodul der zuvor genannten Art verfügen.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichen

- 101: Endgerät
- 102i: Applikation (i = a, b, c)
- 103: Funkmodul
- 104: Identifizierungsmodul
- 105i: Lizenzinformation (i = a, b, c)
- 106: Steuerungseinheit

- 201: weiteres Gerät (zur Ausführung von Applikationen)
- 202: Kommunikationsverbindung

- 301: Mobilfunknetz, Heimatnetz
- 302: Lizenzserver
- 303: OTA-Server (Over-the-Air-Server)
- 304: Datenbank
- 305: SMSC (Short Message Service Center)
- 306: Schnittstelle zwischen OTA-Server und SMSC
- 307: Lizenzdatenbank
- 308: Schnittstelle zwischen OTA-Server und Lizenzserver

## Patentansprüche

1. Verfahren zum Steuern der Freigabe der Nutzung von Inhalten und/oder einer Applikation (102i), wobei die Nutzung freigegeben wird, wenn das Vorhandensein einer gültigen Lizenzinformation (105i) in einem Sicherheitsmodul (104) eines Kommunikationsendgeräts (101) festgestellt wird, **dadurch gekennzeichnet, dass** eine in dem Sicherheitsmodul (104) hinterlegte gültige Lizenzinformation (105i) aufgrund des Empfangs einer Löschungsnachricht-aus dem Sicherheitsmodul (104) gelöscht oder im Sicherheitsmodul (104) als ungültig markiert wird
wobei die Löschungsnachricht an das Endgerät (101) gesendet wird, wenn ein Lizenzserver (302) feststellt, dass eine Lizenz des Nutzers des Endgeräts (101) zur Nutzung der Inhalte und/oder der Applikation (102i) beendet ist
wobei die Inhalte und/oder die Applikation (102i) in dem Kommunikationsendgerät (101) oder in einem mit dem Kommunikationsendgerät (101) verbindbaren weiteren Gerät (201) verwendet wird.

2. Verfahren nach Anspruch 1, wobei die Löschungsnachricht wenigstens ein Authentisierungsmerkmal umfasst und wobei die Lizenzinformation (105i) aufgrund einer erfolgreichen Prüfung der Authentisierungsinformation verworfen wird.

3. Verfahren nach einem der vorangegangenen Ansprüche, wobei die Lizenzinformation (105i) zusammen mit einer Installationsnachricht an das Kommunikationsendgerät gesendet wird und aufgrund des Empfangs der Installationsnachricht in dem Sicherheitsmodul (104) gespeichert wird.

4. Verfahren nach Anspruch 3, wobei die Installationsnachricht wenigstens ein Authentisierungsmerkmal umfasst und wobei die Lizenzinformation (105i) aufgrund einer erfolgreichen Prüfung des Authentisierungsmerkmals in dem Sicherheitsmodul (104) gespeichert wird.

5. Verfahren nach Anspruch 2 oder 4, wobei die Authentisierungsinformation mit einem kryptografischen Schlüssel eines vertrauenswürdigen Servers erzeugt wird.

6. Verfahren nach einem der Ansprüche 2, 4 und 5, wobei die Authentisierungsinformation mit einem dem Sicherheitsmodul (104) zugeordneten Schlüssel erzeugt wird.

7. Verfahren nach einem der vorangegangenen Ansprüche, wobei die Löschungsnachricht und/oder die Installationsnachricht eine Over-the-Air-Nachricht ist.

8. Verfahren nach einem der vorangegangenen Ansprüche, wobei das Sicherheitsmodul (104) ein mit dem Endgerät (101) verbundenes Identifiierungsmodul zur Identifizierung und/oder Authentisierung in dem Mobilfunknetz, welches inbsbesondere in einer mit dem Endgerät (101) verbundenen Chipkarte enthalten ist.

9. Computerprogramm umfassend Softwarecodeabschnitte mit Befehlen zur Ausführung eines Verfahrens nach einem der vorangegangenen Ansprüche, wenn das Programm von einem Prozessor ausgeführt wird.

10. Kommunikationsendgerät (101) zur Freigabe einer Nutzung von Inhalten und/oder eine Applikation (102i), wobei das Endgerät (101) ein Sicherheitsmodul (104) umfasst und die Nutzung freigebbar ist, wenn das Vorhandensein einer gültigen Lizenzinformation (105i) in dem Sicherheitsmodul (104) festgestellt wird, **dadurch gekennzeichnet, dass** das Sicherheitsmodul (104) derart ausgestaltet ist, dass eine in dem Sicherheitsmodul (104) hinterlegte gültige Lizenzinformation (105i) aufgrund des Empfangs einer Löschungsnachricht aus dem Sicherheitsmodul (104) gelöscht oder im Sicherheitsmodul (104) als ungültig markiert wird
wobei die Löschungsnachricht an das Endgerät (101) gesendet wird, wenn ein Lizenzserver (302) feststellt, dass eine Lizenz des Nutzers des Endgeräts (101) zur Nutzung der Inhalte und/oder der Applikation (102i) beendet ist
wobei die Inhalte und/oder die Applikation (102i) in dem Kommunikationsendgerät (101) oder in einem mit dem Kommunikationsendgerät (101) verbindbaren weiteren Gerät (201) verwendet wird.

11. Kommunikationsendgerät (101) nach Anspruch 10, wobei das Kommunikationsendgerät (101) dazu ausgestaltet ist, die Inhalte wiederzugeben und/oder die Applikation (102i) auszuführen.

12. System mit einem Kommunikationsendgerät (101) nach Anspruch 10 und einem weiteren Gerät (201), wobei das weitere Gerät (201) dazu ausgestaltet ist, die Inhalte wiederzugeben und/oder die Applikation (102i) auszuführen.

## Claims

1. Method for controlling the enabling of the use of content and/or an application (102i), wherein the use is enabled if the presence of valid license information (105i) in a security module (104) of a communication terminal (101) is established, **characterised in that** valid licence information (105i) stored in the security module (104) is deleted from the security module (104) or marked as invalid in the security module (104) on the basis of the receipt of a delete message,
wherein the delete message is transmitted to the terminal (101) if a licence server (302) establishes that a licence of the user of the terminal (101) for using the content and/or the application (102i) has ended,
wherein the content and/or the application (102i) is used in the communication terminal (101) or in an additional device (201) that can be connected to the communication terminal (101).

2. Method according to claim 1, wherein the delete message includes at least one authentication feature and wherein the licence information (105i) is discarded on the basis of successfully checking the authentication information.

3. Method according to any of the preceding claims, wherein the licence information (105i) is transmitted to the communication terminal together with an installation message and is stored in the security module (104) on basis of the receipt of the installation message.

4. Method according to claim 3, wherein the installation message includes at least one authentication feature and wherein the licence information (105i) is stored in the security module (104) on the basis of successfully checking the authentication feature.

5. Method according to claim 2 or 4, wherein the authentication information is generated by means of a cryptographic key of a secure server.

6. Method according to any of claims 2, 4 and 5, wherein the authentication information is generated by means of a key assigned to the security module (104).

7. Method according to any of the preceding claims, wherein the delete message and/or the installation message is an over-the-air message.

8. Method according to any of the preceding claims, wherein the security module (104) is an identification module connected to the terminal (101) for identification and/or authentication in the mobile communication network which is in particular contained in an integrated circuit card connected to the terminal (101).

9. Computer program comprising portions of software code containing commands for executing a method according to any of the preceding claims when the program is executed by a processor.

10. Communication terminal (101) for enabling use of content and/or an application (102), wherein the terminal (101) comprises a security module (104) and wherein it is possible to enable the use if the presence of valid license information (105i) in the security module (104) is established, **characterised in that** the security module (104) is configured to delete from the security module (104) valid licence information (105i) stored in the security module (104), or to mark said information as invalid in the security module (104), on the basis of the receipt of a delete message,
wherein the delete message is transmitted to the terminal (101) if a licence server (302) establishes that a licence of the user of the terminal (101) for using the content and/or the application (102i) has ended,
wherein the content and/or the application (102i) is used in the communication terminal (101) or in an additional device (201) that can be connected to the communication terminal (101).

11. Communication terminal (101) according to claim 10, wherein the communication terminal (101) is configured to reproduce the content and/or to execute the application (102i).

12. System comprising a communication terminal (101) according to claim 10 and comprising an additional device (201), the additional device (201) being configured to reproduce the content and/or to execute the application (102i).

## Revendications

1. Procédé de commande de l'autorisation d'utilisation de contenus et/ou d'une application (102i), l'utilisation étant autorisée quand la présence d'une information de licence (105i) valide est constatée dans un module de sécurité (104) d'un terminal de communication (101), **caractérisé en ce qu'**une information de licence (105i) valide enregistrée dans le module de sécurité (104) est supprimée du module de sécurité (104) ou marquée comme non valide dans le module de sécurité (104) en raison de la réception d'un message de suppression,
le message de suppression étant envoyé au terminal (101) quand un serveur de licences (302) constate qu'une licence de l'utilisateur du terminal (101) pour l'utilisation des contenus et/ou de l'application (102i) a expiré
les contenus et/ou l'application (102i) étant utilisés dans le terminal de communication (101) ou dans un autre appareil (201) pouvant être relié au terminal de communication (101).

2. Procédé selon la revendication 1, dans lequel le message de suppression comprend au moins une caractéristique d'authentification et dans lequel l'information de licence (105i) est rejetée en raison d'une vérification réussie de l'information d'authentification.

3. Procédé selon l'une des revendications précédentes, dans lequel l'information de licence (105i) est envoyée au terminal de communication conjointement avec un message d'installation et est enregistrée dans le module de sécurité (104) en raison de la réception du message d'installation.

4. Procédé selon la revendication 3, dans lequel le message d'installation comprend au moins une caractéristique d'authentification et dans lequel l'information de licence (105i) est enregistrée dans le module de sécurité (104) en raison d'une vérification réussie de la caractéristique d'authentification.

5. Procédé selon la revendication 2 ou 4, dans lequel l'information d'authentification est générée avec une clé cryptographique d'un serveur fiable.

6. Procédé selon l'une des revendications 2, 4 et 5, dans lequel l'information d'authentification est générée avec une clé associée au module de sécurité (104).

7. Procédé selon l'une des revendications précédentes, dans lequel le message de suppression et/ou le message d'installation est un message Over The Air.

8. Procédé selon l'une des revendications précédentes, dans lequel le module de sécurité (104) est un module d'identification relié au terminal (101) pour l'identification et/ou l'authentification dans le réseau de téléphonie mobile, qui est en particulier compris dans une carte à puce reliée au terminal (101).

9. Programme informatique comprenant des parties de code logiciel avec des instructions pour l'exécution d'un procédé selon l'une des revendications précédentes, quand le programme est exécuté par un processeur.

10. Terminal de communication (101) pour l'autorisation d'utilisation de contenus et/ou d'une application (102i), le terminal (101) comprenant un module de sécurité (104) et l'utilisation pouvant être autorisée quand la présence d'une information de licence (105i) valide est constatée dans le module de sécurité (104), **caractérisé en ce que** le module de sécurité (104) est conçu de telle manière qu'une information de licence (105i) valide enregistrée dans le module de sécurité (104) est supprimée du module de sécurité (104) ou marquée comme non valide dans le module de sécurité (104) en raison de la réception d'un message de suppression
le message de suppression étant envoyé au terminal (101) quand un serveur de licences (302) constate qu'une licence de l'utilisateur du terminal (101) pour l'utilisation des contenus et/ou de l'application (102i) a expiré
les contenus et/ou l'application (102i) étant utilisés dans le terminal de communication (101) ou dans un autre appareil (201) pouvant être relié au terminal de communication (101).

11. Terminal de communication (101) selon la revendication 10, dans lequel le terminal de communication (101) est conçu pour reproduire les contenus et/ou exécuter l'application (102i).

12. Système comprenant un terminal de communication (101) selon la revendication 10 et un autre appareil (201), dans lequel l'autre appareil (201) est conçu pour reproduire les contenus et/ou exécuter l'application (102i).
